# EUROPÄISCHE PATENTSCHRIFT

(11) **EP 0 512 542 B1**
(45) Veröffentlichungstag und Bekanntmachung des Hinweises auf die Patenterteilung: **12.02.1997**
(21) Anmeldenummer: 92107709.5
(22) Anmeldetag: 07.05.1992
(51) Int. Cl.: G06K 19/07

(54) **Datenschützende Mikroprozessorschaltung für tragbare Datenträger, beispielsweise Kreditkarten**
Data-protecting microprocessor circuit for portable record carriers, for example credit cards
Circuit à micro-processeur protégeant les données pour des supports de données portables, par example cartes de crédit

(30) Priorität: 08.05.1991 DE 4115152
(43) Veröffentlichungstag der Anmeldung: 11.11.1992
(73) Patentinhaber: GAO Gesellschaft für Automation und Organisation mbH, 81307 München (DE)
(72) Erfinder: Weikmann, Franz, Dr., W-8000 München 80 (DE)
(74) Vertreter: Klunker . Schmitt-Nilson . Hirsch

(56) Entgegenhaltungen:
- FR-A- 2 600 446
- FR-A- 2 606 909
- US-A- 4 734 568
- PATENT ABSTRACTS OF JAPAN, Band 14, Nr. 50 (P-998), 30. Januar 1990; & JP-A-1277948

## Beschreibung

Die Erfindung betrifft eine datenschützende Mikroprozessorschaltung gemäß dem Oberbegriff des Anspruchs 1.

Mikroprozessorschaltungen der genannten Art finden bevorzugt Anwendung in sogenannten Chipkarten, d. h. Ausweiskarten, Kreditkarten, Buchungskarten und dergleichen, die mit einem integrierten Schaltkreis ausgestattet sind. Die Mikroprozessorschaltungen sind aber auch in sogenannten Zahlungsverkehrsmodulen einsetzbar, die mit den obengenannten Karten über entsprechende Schnittstellen kommunizieren.

Um das Verständnis der Erfindung zu erleichtern, soll sich die folgende Beschreibung auf die Anwendung der Mikroprozessorschaltung bei Karten beziehen.

Eine Karte mit Mikroprozessor wurde erstmals in der DE-OS 27 38 113 beschrieben. Einer der wesentlichen Vorteile einer solchen Karte besteht in der vielfältigen Verwendungsmöglichkeit seitens des Karteninhabers. Der im integrierten Schaltkreis der Karte enthaltende Mikroprozessor und die dazugehörigen Speichermittel erlauben eine umfangreiche Datenverarbeitung in der Karte selbst, wohingegen die beispielsweise mit Magnetstreifen versehenen Karten es erforderlich machen, sämtliche Datenverarbeitungsvorgänge extern durchzuführen.

Der Kartenhersteller kann den Mikroprozessor mit einem fest gespeicherten Betriebssystem ausstatten, welches grundlegende Funktionen übernimmt, beispielsweise Prozeduren zum Vergleichen eines extern eingegebenen Codes mit einem gespeicherten Code und dergleichen. Die zu dem Mikroprozessor gehörigen Speicher dienen außer zur Abspeicherung des Betriebssystems auch zum Abspeichern bestimmter Anwendungen und Parameter, die z. B. zur Sicherheitsüberprüfung notwendig sind und auf jeden Fall geheimgehalten werden müssen.

Eine vielseitige Anwendung der Karten erreicht man dann, wenn man von einem Betriebssystem mit zugehörigen Programmen ausgeht, gewisse Schnittstellen definiert und einen Speicher oder Speicherbereich für ein sogenanntes Fremdprogramm reserviert. Der Kartenhersteller stellt dann für die Anwender, d. h. für die Karten ausgebenden Organisationen, einen Speicher bzw. Speicherbereich zur Einprogrammierung ihres Fremdprogramms zur Verfügung. In diesem Fremdprogramm kann die Organisation dann spezifische Operationen festlegen, die unabhängig vom Betriebssystem sind und die lediglich die spezielle Organisation betreffen.

Eine weitere denkbare Variante besteht darin, daß nicht nur eine einzige Organisation ihr Fremdprogramm in die vorgefertigte Chipkarte einprogrammiert, sondern daß mehrere unterschiedliche Organisationen ihre entsprechenden Programme einspeichern.

In jedem Fall muß dafür gesorgt werden, daß sicherheitsrelevante Daten, die Bestandteil des Betriebssystems oder auch der einzelnen Fremdprogramme sind, vor unbefugtem Zugriff geschützt werden.

Der Erfindung liegt die Aufgabe zugrunde, eine Schaltung anzugeben, die mit einfachen Maßnahmen sicherstellt, daß seitens eines Fremdprogramms nur auf solche Speicherbereiche zugegriffen werden kann, die ausdrücklich für einen Zugriff zugelassen sind.

Die Aufgabe wird erfindungsgemäß durch die in den Ansprüchen 1 und 12 angegebenen Merkmale jeweils gelöst.

Gemäß einer ersten Ausführungsform der Erfindung besteht die datenschützende Schaltung aus einer ersten Einrichtung zur Überwachung der jeweils angesprochenen Adresse, einer zweiten Einrichtung zur Überwachung des Mikroprozessor-Programmzählers sowie einer weiteren Einrichtung, die die Signale der Überwachungseinrichtungen zur Erzeugung eines Sperrsignals verknüpft.

Durch die Überwachung des Programmzählerstandes ist die Schutzschaltung jederzeit in der Lage festzustellen, welches der geladenen Programme gerade ausgeführt wird. Bei gleichzeitiger Überwachung der vom jeweils aktiven Programm aufgerufenen Adresse kann über die Verknüpfungsschaltung auf einfache Weise auf einen nicht zulässigen Speicherzugriff reagiert werden, indem beispielsweise ein Reset-Signal auf den Mikroprozessor geführt wird.

Die Schutzschaltung ist vom eigentlichen Mikroprozessor entkoppelt, aber vorzugsweise auf dem den Mikroprozessor aufnehmenden integrierten Schaltkreis vorgesehen. Durch die Vorgabe entsprechender Sollwerte für den jeweiligen Programmzählerstand und die jeweiligen Adressen lassen sich beliebige Speicherbereiche definieren, die für einen bestimmten Anwender zulässig bzw. nicht zulässig sind. Sollen bestimmte Speicherbereiche selektiv bezüglich des Lesens oder Schreibens gesperrt werden, so ist das Schreib-/Lesesignal des Mikroprozessors in der Schutzschaltung entsprechend mit zu verarbeiten.

Eine andere Ausführungsform der Erfindung sieht vor, daß die Schutzschaltung durch einen als Sicherungsprozessor bezeichneten Mikroprozessor ausgebildet ist, der den die Fremdprogramme ausführenden als Arbeitsprozessor bezeichneten Mikroprozessor überwacht. Durch diese Maßnahme steht der Arbeitsprozessor unter ständiger Kontrolle des Sicherungsprozessors, der nach jedem Reset und der darauffolgenden Initialisierungsphase den Betrieb des Arbeitsprozessors frei gibt. Stellt der Sicherungsprozessor fest, daß der ein bestimmtes Fremdprogramm ausführende Arbeitsprozessor auf einen nicht zulässigen Speicherbereich zugreift, so gibt der Sicherungsprozessor ein Sperrsignal auf einen nichtmaskierten Interrupteingang oder den Reset-Eingang des Arbeitsprozessors.

Da der Sicherungsprozessor sämtliche Einzelschritte des Arbeitsprozessors überwachen soll, wird er zweckmäßigerweise mit einer höheren Taktfrequenz arbeiten als der Arbeitsprozessor.

Wenn in dem dem Arbeitsprozessor zugeordneten Speicher mehrere Fremdprogramme gespeichert sind, muß ein Zugriff nicht nur zum Betriebssystem, sondern auch zu anderen Fremdprogrammen verhindert werden. Die dazu notwendigen Sollwerte werden zweckmäßigerweise in einem dem Sicherungsprozessor zugeordneten Speicher als Grenzwerte eingespeichert. Dazu ist dem Sicherungsprozessor ein Grenzwertspeicher zugeordnet, in welchem die Grenzwerte für die überwachten Adressen und für die möglichen Inhalte des Programmzählers des Arbeitsspeichers abgelegt sind. Auf diese Bereiche hat der Arbeitsprozessor keine Zugriffsmöglichkeit.

Das Sperren der Ausführung eines Fremdprogramms bei unberechtigtem Speicherzugriff kann auch dadurch erreicht werden, daß nur ein bestimmter Satz von interpretierbaren Befehlen zugelassen wird. Die Befehle des Fremdprogramms werden dann unter der Kontrolle des Betriebssystems ausgeführt, wobei gewährleistet ist, daß ein Zugriff nur auf solche Bereiche stattfindet, auf die ein Zugriff ausdrücklich zugelassen ist. Der Programmzähler des Mikroprozessors gelangt so nie unter die Kontrolle des Fremdprogramms.

Neben den oben angesprochenen Möglichkeiten sieht die Erfindung in einer weiteren Variante vor, daß mehrere frei programmierbare Speicherbereiche vorgesehen sind, deren Adressräume bis auf wenigstens eine höchstwertige Stelle gleich sind. Die jeweils höchstwertige, einem Speicherbereich zugeordnete Stelle, wird jeweils vor der Adressierung des Speicherbereichs in ein Hilfsregister geladen. Bei jeder Änderung des Dateninhalts des Hilfsregisters wird ein Sperrsignal erzeugt. Mit jedem Ladevorgang des Hilfsregisters wird seitens des Mikroprozessors ein bestimmter Anwender definiert. Greift dieser Anwender auf einen nicht erlaubten Speicherbereich zu, was sich in einer entsprechenden Änderung des Hilfsregisterinhalts auswirkt, erzeugt die Schutzschaltung, die den Inhalt des Hilfsregisters überwacht, ein Sperrsignal.

Weitere Vorteile und Weiterbildungen der Erfindung ergeben sich aus den Unteransprüchen sowie den Ausführungsbeispielen, die nachfolgend anhand der Figuren beschrieben werden. Darin zeigen:
- Fig. 1: einen Datenträger mit integriertem Schaltkreis,
- Fig. 2: ein Blockschaltbild einer für einen Datenträger vorgesehenen integrierten Schaltung mit Mikroprozessor, Speicher und Sperrschaltung,
- Fig. 3: ein Blockschaltbild einer für einen Datenträger vorgesehenen integrierten Schaltung mit einem Arbeitsprozessor und einem Sicherungsprozessor sowie zugehörigen Speichern und
- Fig. 4: ein Blockschaltbild einer für einen Datenträger vorgesehenen integrierten Schaltung mit Mikroprozessor, Speicher und Sperrschaltung.

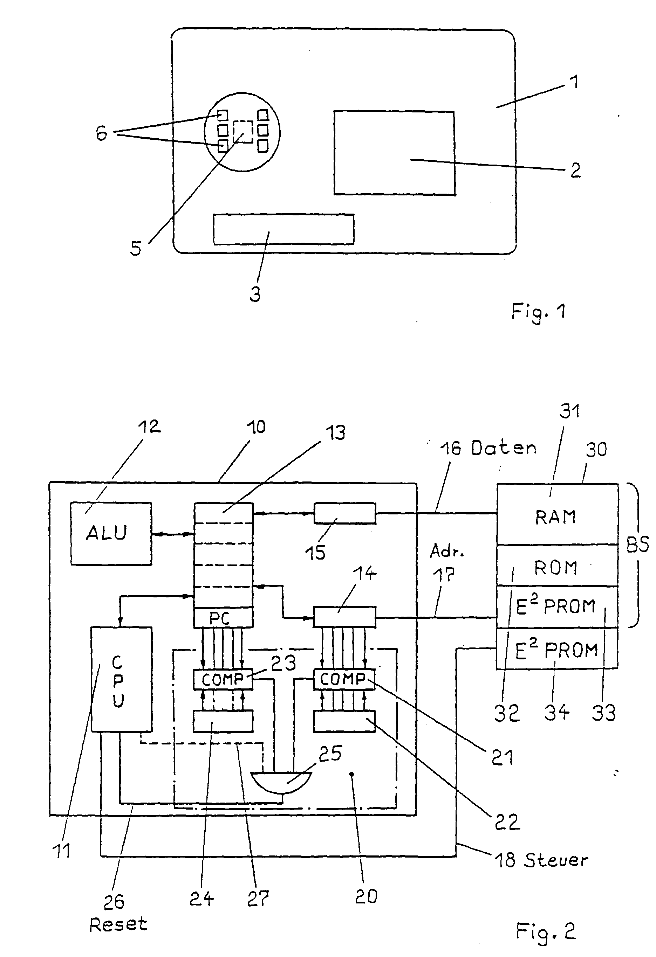

Fig. 1 zeigt den Aufbau eines Datenträgers, beispielsweise einer Kreditkarte 1 mit Klarschrift-Datenfeld 2, Unterschriftsstreifen 3, und einen in den Kartenkörper eingebetteten integrierten Schaltkreis 5 mit Anschlußkontakten 6. Die Anschlüsse sind hier als Anschlußkontakte 6 in Form von zwei Reihen ausgebildet. Der Aufbau derartiger Karten ist grundsätzlich bekannt und soll hier nicht näher erläutert werden. Ferner ist die Art und Weise des Gebrauchs und die Datenverarbeitung in Verbindung mit solchen Kreditkarten bekannt. Über die Anschlußkontakte 6 erfolgt ein Datenaustausch mit beispielsweise einem Terminal, einem Geldausgabeautomaten oder dergleichen. In der integrierten Schaltung der Kreditkarte werden beispielsweise Sicherheitsroutinen ausgeführt, die für den Berechtigungsnachweis des Kartenbenutzers notwendig sind.

Fig. 2 zeigt eine erste Ausführungsform einer integrierten Schaltung, wie sie in der Kreditkarte eingebaut ist. Ein Mikroprozessor 10 enthält eine Steuereinheit 11, die über eine Steuerleitung 18 mit einer Speicheranordnung 30 verbunden ist, eine arithmetisch-logische Einheit (ALU) 12, einen Registersatz 13, ein Adreßregister 14 und ein Datenregister 15. Ein Register des Registersatzes 13 dient als Programmzähler, dessen Inhalt festlegt, auf welche Adresse einer Speicheranordnung 30 zugegriffen wird, um einen Befehl des dort gespeicherten Fremdprogramms abzurufen. Der Befehl veranlaßt beispielsweise, daß aus einer bestimmten Adresse des Speichers ein Datenwert ausgelesen wird. Hierzu wird in dem Adreßregister 14 eine Adresse gespeichert, die beim nächsten Speicherzugriff festlegt, auf welche Adresse zugegriffen wird.

Die Adresse wird über einen Adreßbus 17 an die Speicheranordnung 30 gegeben. Die in den Speicher 30 eingeschriebenen oder aus dem Speicher 30 ausgelesenen Daten gelangen über einen Datenbus 16 in das Datenregister 15 und von dort in ein Register des Registersatzes 13.

Die Speicheranordnung 30 umfaßt im dargestellten Beispiel einen Schreib-/Lesespeicher (RAM) 31, einen Festspeicher (ROM) 32 und E²PROM 33. Diese Speicherbereiche 31, 32 und 33 gehören zu dem Betriebssystem (BS), welches zum Teil sicherheitsrelevante Daten enthält, die auf jeden Fall geheimgehalten werden müssen. Um dies zu gewährleisten, ist in dieser einfachen Ausführungsform gemäß Figur 2 der Zugriff zu sämtlichen Speicherbereichen 31, 32, 33 des Betriebssystems (BS) für einen Anwender aus seinem Fremdprogramm heraus gesperrt.

Will der Hersteller dem Anwender einen Bereich des Betriebssystems zugänglich machen, der dann selbstverständlich keine sicherheitsrelevanten Daten enthalten darf, so müßte die nachfolgend beschriebene Schutzschaltung 20 in Bezug auf die noch verbleibenden zu schützenden Adressen des Betriebssystems entsprechend angepaßt werden. Indem dem Anwender ein Bereich des Betriebssystems aus seinem Fremdprogramm heraus zugänglich gemacht wird, ist es beispielsweise möglich, ihm die Benutzung zu einer Routine, z. B. zum Vergleich einer eingegebenen Nummernfolge mit einer im Betriebssystem - geschützt - gespeicherten Nummernfolge, zu ermöglichen und ihm hierdurch die Erstellung seines Fremdprogramms zu erleichtern.

Weiterhin enthält die Speicheranordnung 30 einen Speicherbereich 34 für ein Fremdprogramm. Dieses Fremdprogramm kann von einer Organisation, welche mit dem Hersteller der Karte nicht identisch ist, geladen werden. Hierzu ist der Speicherbereich 34 als E²PROM ausgebildet. Das Fremdprogramm, welches seitens des Anwenders geladen wird, nimmt die Speicherplätze w bis x ein, während das Betriebssystem die Speicherplätze 0 bis w - 1 einnimmt.

Das Fremdprogramm enthält spezielle Routinen und Daten, um beispielsweise festzustellen, ob die von dem Karteninhaber geforderte Dienstleistung, z. B. eine Geldausgabe, zugelassen wird, was beispielsweise vom jeweiligen Kontostand des Karteninhabers abhängt. Nachdem der Karteninhaber die Karte in einen Automaten eingeführt hat, erfolgt ein Datenaustausch zwischen dem Automaten und dem Mikroprozessor 10. Nach der Initialisierung und der Durchführung bestimmter Routinen durch das Betriebssystem kann der weitere Betrieb durch das im Speicherbereich 34 gespeicherte Fremdprogramm erfolgen, beispielsweise dadurch, daß der Programmzähler PC im Registersatz 13 auf die Adresse w eingestellt wird. Damit wird als nächstes der in der ersten Speicherstelle des Speicherbereichs 34 gespeicherte Befehl des Fremdprogramms aufgerufen.

Um nun zu verhindern, daß seitens des Fremdprogramms auf Adressen in den Speicherbereichen 31, 32 und 33 zugegriffen wird, ist eine erfindungsgemäße Schutzschaltung 20 vorgesehen. Diese Schaltung ist zusätzlich zu dem Mikroprozessor 10 und der Speicheranordnung 30 vorhanden. Vorzugsweise sind alle Komponenten als integrierte Schaltung auf einem einzigen Chip ausgebildet.

Die Schutzschaltung 20 enthält einen ersten Komparator 21, ein erstes Hilfsregister (HRI) 22, einen zweiten Komparator 23, ein zweites Hilfsregister (HRII) 24, ein UND-Gatter 25 und eine Ausgangsleitung 26, die von dem UND-Gatter 25 zu der Steuerschaltung 11 des Mikroprozessors 10 führt.

Der Komparator 21 vergleicht die Inhalte des Adreßregisters 14 und des Hilfsregisters 22, während der Komparator 23 den Inhalt des Programmzählers mit dem Inhalt des Hilfsregisters 24 vergleicht.

Die Inhalte der beiden Hilfsregister 22 und 24 können herstellerseitig in fest verdrahteter Logik "vorprogrammiert" sein. Die Inhalte können auch jeweils im Zuge der Initialisierung des Mikroprozessors durch das Betriebssystem aus gesicherten Speichern in die Hilfsregister geladen werden.

In das Hilfsregister 22 wird die Adresse w geladen, bei der das Fremdprogramm im Speicherbereich 34 beginnt. Im Hilfsregister 24 wird ebenfalls der Wert w gespeichert. Während der Komparator 21 ein Signal liefert, wenn die im Adreßregister 14 enthaltene Adresse kleiner ist als die im Hilfsregister 22 gespeicherte Adresse w (dies bedeutet, daß das Fremdprogramm auf eine unerlaubte Speicherstelle zwischen 0 und w - 1 zugreift), liefert der Komparator 23 ein Signal, wenn der Inhalt des Programmzählers PC des Registersatzes 13 größer oder gleich dem im Hilfsregister 24 gespeicherten Wert w ist, wobei letzeres bedeutet, daß gerade das Fremdprogramm ausgeführt wird.

Wenn beide Komparatoren 21 und 23 ein Signal liefern, so bedeutet dies, daß das Fremdprogramm ausgeführt und daß auf eine unerlaubte Adresse zugegriffen wird, die außerhalb des Adreßraums des Fremdprogramms liegt. Hierbei liefert das UND-Gatter 25 beispielsweise ein Reset-Signal über die Leitung 26 an die Steuereinheit 11, die dadurch eine weitere Ausführung des Fremdprogramms sperrt.

Um das Schreiben oder Lesen selektiv zu sperren, wird das Schreib-/Lesesignal des Mikroprozessors in der Schutzschaltung 20 mit verarbeitet (siehe Leitung 27).

In einer Abwandlung der Ausführungsform gemäß Fig. 2 können zusätzliche Komparatoren mit dazugehörigen Hilfsregister vorgesehen werden, wenn weitere Speicherbereiche für weitere, von verschiedenen Anwendern zu ladende Fremdprogramme vorhanden sind.

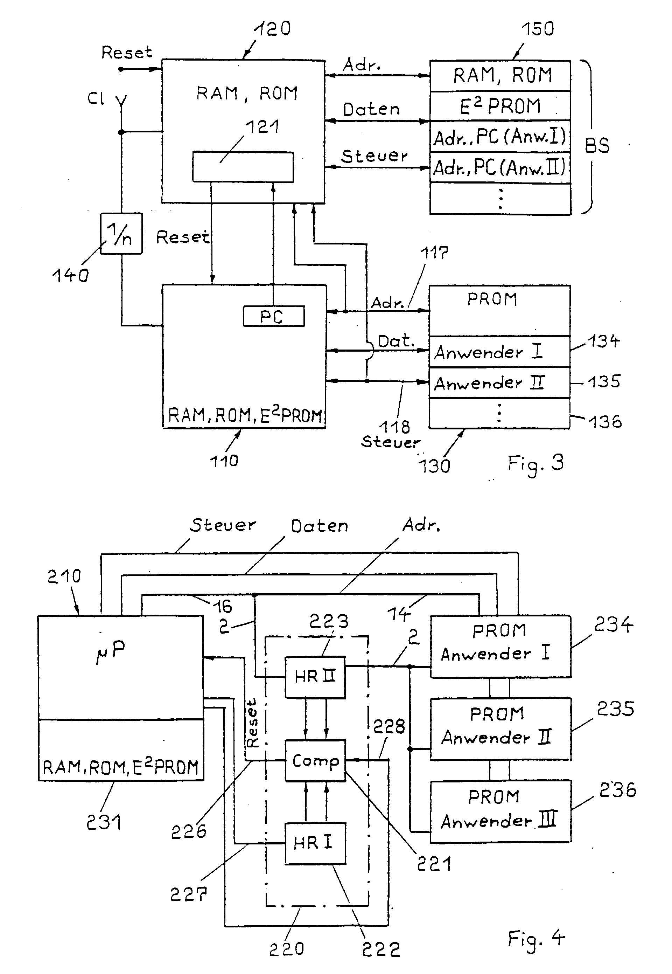

Fig. 3 zeigt eine zweite Ausführungsform der Erfindung. Ein Arbeitsprozessor 110 mit der dazugehörigen Speicheranordnung (PROM)130 hat im wesentlichen die gleiche Funktion wie der Mikroprozessor 10 mit der dazugehörigen Speicheranordnung 30 in Fig. 2.

Als Schutzschaltung dient hier ein zweiter Prozessor, nämlich ein Sicherungsprozessor 120, der eine eigene Speicheranordnung 150 aufweist.

Ein Betriebstaktsignal C1 legt die Arbeitsgeschwindigkeit des Sicherungsprozessors 120 fest. Über eine Teilerschaltung 140 wird die Frequenz des Taktsignals durch n geteilt, so daß der Arbeitsprozessor 110, der das Ausgangssignal der Teilerschaltung 140 empfängt, nur mit der 1/n-ten Geschwindigkeit arbeitet wie der Sicherungsprozessor 120.

Der Sicherungsprozessor 120 enthält eine Steuereinheit 121, die bei Feststellung eines unberechtigten Speicherzugriffs seitens eines Fremdprogramms ein Reset-Signal an den Arbeitsprozessor 110 gibt. Hierzu werden der Adreßbus 117 und die Steuerleitung 118 zwischen dem Arbeitsprozessor 110 und der Speicheranordnung 130 überwacht. Außerdem erfolgt eine Überwachung des Programmzählers (PC) des Arbeitsprozessors. Sowohl die Daten auf dem Adreßbus 117 als auch der Inhalt des Programmzählers PC werden für jedes Fremdprogramm mit bestimmten Grenzwerten verglichen.

Die Speicheranordnung 130 für den Arbeitsprozessor 110 enthält mehrere Speicherbereiche für verschiedene Anwender, die hier als Anwender I, Anwender II... bezeichnet sind. Wie oben erwähnt, werden diese Fremdprogramme von einer von dem Kartenhersteller verschiedenen Organisationen separat geladen. Die Speicherbereiche 134, 135 und 136 der Speicheranordnung 130 sind vorzugsweise als nichtflüchtiger Speicher (z. B. E²PROM) ausgebildet.

Wenn ein bestimmtes Fremdprogramm, z. B. das im Speicherbereich 134 des Anwenders I gespeicherte Programm, von dem Arbeitsprozessor 110 nach erfolgter Initialisierung ausgeführt wird, vergleicht der Sicherungsprozessor 120 die jeweiligen Adreßsignale und Programmzähler-Inhalte mit den dazugehörigen Grenzwerten für diesen Anwender. Diese Grenzwerte sind in der Speicheranordnung 150 als Bestandteil des Betriebssystems des Sicherungsprozessors 120 gespeichert. Wenn z. B. das Fremdprogramm des Anwenders I ausgeführt wird, darf der Inhalt des Programmzählers PC nur einen bestimmten Wertebereich abdecken. Außerdem dürfen die Adressen auf dem Adreßbus 117 nur diesem Wertebereich entsprechen. Bei Abweichungen gibt der Sicherungsprozessor 120 das Reset-Signal zum Sperren der Ausführung des Fremdprogramms an den Arbeitsprozessor 110.

Fig. 4 zeigt eine dritte Ausführungsform der Erfindung, wobei der dem Mikroprozessor 210 zugeordnete Betriebssystem-Speicher 231 getrennt von denSpeicherbereichen 234, 235 und 236 angeordnet sind. Letztere dienen zur Aufnahme von Fremdprogrammen für drei verschiedene Anwender. Zwischen dem Mikroprozessor 210 und den drei Speichern bzw. Speicherbereichen 234, 235, 236 verlaufen Adreß-, Daten- und Steuerbus.

Der Adreßraum für den Zugriff auf die drei (PROM-) Speicherbereiche 234, 235, 236 umfaßt beispielsweise 16 Bits, wobei die zwei höchstwertigen Bits festlegen, welcher Speicher bzw. welcher Speicherbereich für den aktuellen Zugriff vorgesehen ist. Insgesamt können mit den zwei höchstwertigen Bits vier Speicher oder Speicherbereiche angesprochen werden (00, 01, 10, 11).

Jeweils vor der Ausführung eines Fremdprogramms wird durch das Betriebssystem, beispielsweise gesteuert durch anwenderspezifische Paramter, in ein erstes Hilfsregister 222 (HRI) ein Wert eingegeben, der im vorliegenden Fall zwei Bit umfaßt. Wenn beispielsweise das Fremdprogramm im Speicher 234 ausgeführt werden soll und dieser Speicher Adressen mit der Bit-Kombination "01" in den zwei höchstwertigen Bit-Stellen aufweist, so wird in das Speicherregister 222 der Wert "01" eingespeichert.

Zu Beginn der Ausführung des Fremdprogramms, d. h. mit der ersten Adressierung, werden die beiden höchstwertigen Stellen des Adreßregisters von dem Adreßbus in ein zweites Hilfsregister (HRII) 223 geladen und ein die Inhalte der beiden Hilfsregister 222 und 223 vergleichender Komparator 221 durch ein entsprechendes Steuersignal 228 des Mikroprozessors aktiviert. Solange der Inhalt des Hilfsprogramms 222 mit dem Hilfsregister 223 übereinstimmt, bedeutet dies, daß sich das Fremdprogramm lediglich in dem ihm zugeordneten Adreßraum (Speicherbereich 234) bewegt. Wird auf einen anderen Adreßraum zugegriffen, so ändern sich damit die beiden höchstwertigen Stellen des Adreßsignals und damit der Inhalt des Hilfsregisters 223. Dies wird von dem Komparator 221 festgestellt, der über eine Leitung 226 ein Reset-Signal an den Mikroprozessor 210 gibt.

## Patentansprüche

1. Datenschützende Mikroprozessorschaltung zur Verhinderung des Zugriffs auf in Speichern abgelegte Daten oder Programme mit wenigstens einem Mikroprozessor, einem Speicher für ein Betriebssystem und wenigstens einem Speicher zur freien Programmierung mit einem individuellen Fremdprogramm, **gekennzeichnet,** durch
- eine erste Einrichtung zur Überwachung der jeweils gültigen Adresse durch die Vorgabe entsprechender Sollwerte für die jeweilige Adresse,
- eine zweite Einrichtung zur Überwachung des jeweiligen Inhalts des Mikroprozessor-Programmzählers, um jederzeit festzustellen, welches der Programme gerade ausgeführt wird,
- und eine dritte Einrichtung, die die Signale der Überwachungseinrichtungen verknüpft zur Erzeugung eines Sperrsignals, wenn ein Fremdprogramm ausgeführt wird, das auf eine unerlaubte Adresse zugreift.

2. Mikroprozessorschaltung nach Anspruch 1, dadurch **gekennzeichnet,** daß die aus erster, zweiter und dritter Einrichtung bestehende Schutzschaltung in fest verdrahteter Logik auf dem den Mikroprozessor enthaltenden Schaltkreis vorgesehen ist.

3. Mikroprozessorschaltung nach Anspruch 1 oder 2, dadurch **gekennzeichnet,** daß die Überwachungseinrichtungen aus jeweils einem Hilfsregister und einem Komparator bestehen, wobei die Hilfsregister vorgegebene Sollwerte für Adressen- und Programmzählerstände enthalten und die Komparatoren jeweils mit einem Hilfsregister und mit dem Programmzähler bzw. dem Adreßregisters des Mikroprozessors verbunden sind.

4. Mikroprozessorschaltung nach Anspruch 1 oder 2, dadurch **gekennzeichnet,** daß die Verknüpfungseinrichtung ein UND-Gatter ist, das mit den Ausgängen der Komparatoren verbunden ist.

5. Mikroprozessorschaltung nach einem oder mehreren der vorhergehenden Ansprüche dadurch **gekennzeichnet,** daß die Sollwerte in einem gegen Zugriff gesicherten Bereich des Betriebssystems enthalten sind und im Zuge der Initialisierung des Mikroprozessors in die Hilfsregister geladen werden.

6. Mikroprozessorschaltung nach einem oder mehreren der vorhergehenden Ansprüche dadurch **gekennzeichnet,** daß das Sperrsignal der Verknüpfungseinrichtung auf den Interrupt-Eingang des Mikroprozessor geführt wird.

7. Mikroprozessorschaltung nach einem oder mehreren der vorhergehenden Ansprüche, dadurch **gekennzeichnet,** daß das Sperrsignal der Verknüpfungseinrichtung auf den Reset-Eingang des Mikroprozessors geführt wird.

8. Mikroprozessorschaltung nach Anspruch 1 oder 2, dadurch **gekennzeichnet,** daß die Schutzschaltung ein zweiter als Sicherheitsprozessor bezeichneter Mikroprozessor ist.

9. Mikroprozessorschaltung nach einem oder mehreren der vorhergehenden Ansprüche, dadurch **gekennzeichnet,** daß der Sicherheitsprozessor und der die Fremdprogramme steuernde als Arbeitsprozessor bezeichnete Mikroprozessor auf dem gleichen integrierten Schaltkreis angeordnet sind.

10. Mikroprozessorschaltung nach einem oder mehreren der vorhergehenden Ansprüche, dadurch **gekennzeichnet,** daß der Sicherheitsprozessor mit einer höheren Taktfrequenz betrieben wird als der Arbeitsprozessor.

11. Mikroprozessorschaltung nach einem oder mehreren der vorhergehenden Ansprüche, dadurch **gekennzeichnet,** daß dem Sicherungsprozessor ein Grenzwertspeicher zugeordnet ist, in welchem Grenzwerte für die überwachten Adressen und für mögliche Inhalte des Programmzählers des Arbeitsprozessors gespeichert sind, auf die der Arbeitsprozessor keine Zugriffsmöglichkeit hat.

12. Datenschützende Mikroprozessorschaltung zur Verhinderung des Zugriffs auf in Speichern abgelegte Daten oder Programme mit wenigstens einem Mikroprozessor, einem Speicher für ein Betriebssystem und wenigstens einem Speicher zur freien Programmierung mit individuellen Fremdprogrammen, dadurch **gekennzeichnet,** daß mehrere freiprogrammierbare Speicherbereiche vorgesehen sind, deren Adreßräume bis auf wenigstens eine höchstwertige Stelle gleich sind, daß Mittel vorgesehen sind, welche die jeweils höchstwertige, einem Speicherbereich zugeordnete Stelle jeweils vor der Adressierung eines Speicherbereichs in ein Hilfsregister laden und die bei einer Änderung des Hilfsregisterinhalts ein Sperrsignal erzeugen, um hierdurch festzustellen, ob ein Fremdprogramm ausgeführt wird, das auf eine unerlaubte Adresse zugreift.

13. Mikroprozessorschaltung nach Anspruch 13, dadurch **gekennzeichnet,** daß die höchstwertige Stelle bzw. höchstwertigen Stellen des Adreßbusses in zwei Hilfsregister geladen werden, die mit einem Komperator verbunden sind.

14. Mikroprozessorschaltung nach einem oder mehreren der vorhergehenden Ansprüche, dadurch **gekennzeichnet,** daß das Schreib-/Lesesignal des Mikroprozessors in der Schutzschaltung verarbeitet wird, um selektiv das Schreiben oder Lesen zu sperren.

## Claims

1. A data protective microprocessor circuit for preventing access to data or programs stored in memories, having at least one microprocessor, a memory for an operating system and at least one memory to be freely programmed with an individual secondary program, characterized by
first means for monitoring the particular valid address by presetting corresponding setpoints for the particular address,
second means for monitoring the particular content of the microprocessor program counter for detecting which of the programs is being executed at any time, and
third means for linking the signals from the monitoring means to generate a blocking signal when a secondary program is executed which accesses an illegal address.

2. The microprocessor circuit of claim 1, characterized in that the protective circuit comprising the first, second and third means is provided in hard-wired logic on the circuit containing the microprocessor.

3. The microprocessor circuit of claim 1 or 2, characterized in that each monitoring means comprises an auxiliary register and a comparator, the auxiliary registers containing predetermined setpoints for address and program counter readings, and the comparators being each connected with an auxiliary register and with the program counter or address register of the microprocessor.

4. The microprocessor circuit of claim 1 or 2, characterized in that the linking means are an AND gate which is connected with the outputs of the comparators.

5. The microprocessor circuit of one or more of the preceding claims, characterized in that the setpoints are contained in an area of the operating system protected from access and are loaded into the auxiliary register in the course of the initialization of the microprocessor.

6. The microprocessor circuit of one or more of the preceding claims, characterized in that the blocking signal from the linking means is conducted to the interrupt input of the microprocessor.

7. The microprocessor circuit of one or more of the preceding claims, characterized in that the blocking signal from the linking means is conducted to the reset input of the microprocessor.

8. The microprocessor circuit of claim 1 or 2, characterized in that the protective circuit is a second microprocessor referred to as a security processor.

9. The microprocessor circuit of one or more of the preceding claims, characterized in that the security processor and the microprocessor controlling the secondary programs and referred to as the working processor are disposed on the same integrated circuit.

10. The microprocessor circuit of one or more of the preceding claims, characterized in that the security processor is operated at a higher clock frequency than the working processor.

11. The microprocessor circuit of one or more of the preceding claims, characterized in that the security processor has associated therewith a limit memory for storing limiting values for the monitored addresses and for possible contents of the program counter of the working processor which cannot be accessed by the working processor.

12. A data protective microprocessor circuit for preventing access to data or programs stored in memories, having at least one microprocessor, a memory for an operating system and at least one memory to be freely programmed with individual secondary programs, characterized in that a plurality of freely programmable memory areas are provided whose address spaces are identical except for at least one highest-order position, means are provided for loading the particular highest-order position associated with a memory area into an auxiliary register before the addressing of a memory area, and for generating a blocking signal upon a change in the auxiliary register content in order to detect whether a secondary program is being executed which accesses an illegal address.

13. The microprocessor circuit of claim 13, characterized in that the highest-order position or positions of the address bus are loaded into two auxiliary registers which are connected with a comparator.

14. The microprocessor circuit of one or more of the preceding claims, characterized in that the write/read signal from the microprocessor is processed in the protective circuit to block writing or reading selectively.

## Revendications

1. Circuit à microprocesseur à protection de données destiné à empêcher l'accès à des données ou à des programmes enregistrés dans des mémoires, comprenant au moins un microprocesseur, une mémoire pour un système d'exploitation et au moins une mémoire à programmer librement à l'aide d'un programme étranger individuel, caractérisé par
- un premier moyen de surveillance de l'adresse valide à chaque instant par prédétermination de valeurs de consigne correspondantes pour l'adresse respective,
- un deuxième moyen de surveillance à chaque instant du contenu du compteur d'instructions du microprocesseur pour déterminer à chaque instant lequel des programmes est en train d'être exécuté,
- et un troisième moyen qui combine les signaux des moyens de surveillance pour engendrer un signal de blocage lorsqu'un programme étranger est exécuté qui accède à une adresse interdite.

2. Circuit à microprocesseur selon la revendication 1, caractérisé en ce que le circuit de protection constitué des premier, deuxième et troisième moyens est formé d'un circuit logique câblé à demeure sur le circuit contenant le microprocesseur.

3. Circuit à microprocesseur selon la revendication 1 ou 2, caractérisé en ce que les moyens de surveillance sont constitués chacun d'un registre auxiliaire et d'un comparateur, les registres auxiliaires contenant des valeurs de consigne prédéterminées pour des états de compteurs d'adresses et d'instructions et les comparateurs étant reliés chacun à un registre auxiliaire et au compteur d'instructions, respectivement au registre d'adresses du microprocesseur.

4. Circuit à microprocesseur selon la revendication 1 ou 2, caractérisé en ce que le moyen de combinaison est une porte ET qui est reliée aux sorties des comparateurs.

5. Circuit à microprocesseur selon l'une ou plusieurs des revendications précédentes, caractérisé en ce que les valeurs de consigne sont contenues dans une zone du système d'exploitation protégée contre les accès et sont chargées dans les registres auxiliaires au cours de l'initialisation du microprocesseur.

6. Circuit à microprocesseur selon l'une ou plusieurs des revendications précédentes, caractérisé en ce que le signal de blocage du moyen de combinaison est transmis à l'entrée d'interruption du microprocesseur.

7. Circuit à microprocesseur selon l'une ou plusieurs des revendications précédentes, caractérisé en ce que le signal de blocage du moyen de combinaison est transmis à l'entrée de réinitialisation du microprocesseur.

8. Circuit à microprocesseur selon la revendication 1 ou 2, caractérisé en ce que le circuit de protection est un deuxième processeur désigné par processeur de sécurité.

9. Circuit à microprocesseur selon l'une ou plusieurs des revendications précédentes, caractérisé en ce que le processeur de sécurité et le microprocesseur exécutant les programmes étrangers désigné par processeur de travail sont disposés sur le même circuit intégré.

10. Circuit à microprocesseur selon l'une ou plusieurs des revendications précédentes, caractérisé en ce que le processeur de sécurité fonctionne à une fréquence plus élevée que celle du processeur de travail.

11. Circuit à microprocesseur selon l'une ou plusieurs des revendications précédentes, caractérisé en ce qu'une mémoire de valeur limite est associée au processeur de sécurité, dans laquelle sont enregistrées des valeurs limites pour les adresses surveillées et pour des contenus possibles du compteur d'instructions du processeur de travail et à laquelle le processeur de travail n'a aucune possibilité d'accès.

12. Circuit à microprocesseur pour empêcher l'accès à des données ou des programmes enregistrés dans des mémoires, comprenant au moins un microprocesseur, une mémoire pour un système d'exploitation et au moins une mémoire à programmer librement à l'aide de programmes étrangers individuels, caractérisé en ce que plusieurs zones de mémoire programmables sont prévues dont les espaces d'adresses sont égaux sauf pour au moins un emplacement le plus significatif, en ce que des moyens sont prévus qui chargent chaque fois dans un registre auxiliaire l'emplacement le plus significatif respectif associé à une zone de mémoire avant l'adressage et qui génèrent un signal de blocage lors d'une modification d'un contenu du registre auxiliaire pour déterminer ainsi si un programme étranger est exécuté qui accède à une adresse interdite.

13. Circuit à microprocesseur selon la revendication 13, caractérisé en ce que l'emplacement le plus significatif, respectivement les emplacements les plus significatifs du bus d'adresses sont chargés dans deux registres auxiliaires qui sont reliés à un comparateur.

14. Circuit à microprocesseur selon l'une ou plusieurs des revendications précédentes, caractérisé en ce que le signal d'écriture / de lecture du microprocesseur est traité dans le circuit de protection pour bloquer sélectivement l'écriture ou la lecture.
